# EUROPEAN PATENT APPLICATION

(11) **EP 2 293 032 A1**
(43) Date of publication of application: **09.03.2011**
(21) Application number: 09169552.8
(22) Date of filing: 04.09.2009
(51) Int. Cl.: G01J 3/28, G01J 3/51, G01N 15/14

(54) **An Integrated Cytometric Sensor System and Method**

(71) Applicant: Radisens Diagnostic Limited, Cork City (IE)
(72) Inventor: O'Brien, Jeremiah, Cork City (IE); Barry, Lee, Co. Cork (IE)
(74) Representative: Lucey, Michael

(57) **Abstract**

The invention provides an integrated cytometric sensor, for use in a cytometric system comprising a plurality of photodiode pixels and a plurality of optical filters positioned on top of said photodiode pixels, wherein each optical filter comprises a set filter characteristic and cooperates with one or more of said plurality of photodiode pixels to define a filter cell. The filter cells are adapted to detect different wavelengths of light, when light is incident on said sensor, wherein different detected wavelengths are representative of specific biological targets At least one or more of the photodiode pixels can be voltage biased in one or more of the following modes: normal, avalanche or Geiger modes, for wide dynamic range operation. By altering the reverse bias voltage, thus putting each photodiode into one of normal, avalanche or Geiger mode, the dynamic range of incident scattering and fluorescent power to which the filter cell array is sensitive to is greatly increased, thus increasing the operational sensitivity and specificity of the cytometric instrument.

## Description

### Field of the Invention

This invention relates generally to an integrated cytometric sensor system and method. In particular the invention relates to a highly integrated and low cost electronic optical sensor device, methods and algorithms for enumeration of microscopic cells, particles or molecules distributed in a sample.

### Background to the Invention

Flow cytometry is a powerful method of analysis to determine the cellular/biological content of various types of samples, and in particular samples that contain living cells. In clinical applications, flow cytometers are useful for myriad of applications including lymphocyte counting and classification, for immunological characterization of leukaemias and lymphomas, and for cross-matching tissues for transplants.

In most flow cytometry techniques, cells in a fluid solution are caused to flow individually through a light beam, usually produced by a laser light source or a monochromatically filtered LED source. As light strikes each cell, the light is scattered and the resulting scattered light is analyzed to determine the type of cell. The cell may also optionally be labelled with a marker linked to a fluorescent molecule, which fluoresces when light strikes it and thereby reveals the presence of the marker on the cell. In this fashion, information about the surface components of the cell can be obtained. Examples of such fluorescent molecules include FITC (fluorescein isothiocyanate), TRITC (tetramethyl rhodamine isothiocyanate), Texas Red (sulforhodamine 101), and PE (phycoerythrin). Intracellular components of the cell, such as nucleic acids, may be stained, and subsequently detected by fluorescence. Examples of such compounds include ethidium bromide, propidium iodide, YOYO-1, YOYO-3, TOTO-1, TOTO-3, BO-PRO-1, YO-PRO-1, and TO-PRO-1. In addition, smaller molecules or proteins in the plasma may be detected using stained microbeads or quantum dots.

Light scattering measurements are widely used in flow cytometry to measure cell sizes and to distinguish among several different types of cells. It is known that incident light is scattered by cells at small angles (approximately 0.5-20 degrees) from the axis of the incident light that interrogates the cells, and that the intensity of the scattered light is proportional to the cell volume. The light scattered at small angles is referred to as forward scattered light. Forward scattered light is useful in determining cell size, thus aiding in distinguishing which cell type is being detected.

The ability to measure cell sizes is influenced by the wavelength employed and the precise range of angles over which light is collected. For example, material within the cells having a strong absorption at the illuminating wavelength may interfere with the size determination because cells containing this material produce smaller forward scatter signals than would otherwise be expected, leading to underestimates of cell size. In addition, differences in refractive index between the cells and the surrounding medium may also influence the small-angle scatter measurements.

Different cell types may be further distinguished on the basis of the amount of orthogonal light scatter (or right angle side scatter) they produce. Cells having a high degree of granularity, such as blood granulocytes, scatter incident light at high angles much more than cells with low granularity, such as lymphocytes. As a result, forward and side scatter measurements are commonly used to distinguish among different types of blood cells, such as red blood cells, lymphocytes, monocytes, and granulocytes.

Much prior art exists for cytometer instruments including improvements to the light source, see for example WO2006104699, assigned to Beckman Coulter Inc and WO0129538, assigned to Beckton Dickinson. Methods to reduce instrument cost, as disclosed in US 2007117158, Coumans et al. Methods to provide increases in multiparametric detection EP 0737855, Beckton Dickinson, and methods to enable a portable cytometer instrument are disclosed by US2003/0142291, assigned to Honeywell International Inc., and WO2007103969 and US2007127863, assigned to Accuri Instruments Inc.

To obtain meaningful information about the numbers and types of cells in the sample, or of the concentration of markers on cell surfaces, the samples must be calibrated with respect to the amount of light scatter or fluorescence associated with standardized populations of the cells. Calibration of the instrument is typically accomplished by passing standard particles through the instrument, and measuring the resulting scatter or fluorescence typically using synthetic standard materials (e.g., polystyrene microbeads). These microbeads are made to be extremely uniform in size, and to contain precise amounts of fluorescent molecules to serve in calibrating the photodetectors used in detection of fluorescent probes. US5380663 (A), assigned to Caribbean Microparticles Inc, discloses one such method for calibrating a flow cytometer, which employs combined populations of fluorescent microbeads and a software program matched to each combined population of microbeads.

A significant amount of training is required to learn how to use these instruments properly, and these instrument systems can require service several times a year. As a result, the high costs associated with purchasing, using and maintaining these high-end instruments make them financially inaccessible to small clinics and doctor's offices. Doctors can get access to these instruments by utilizing commercial laboratories that will pick up the blood samples from the clinic or doctor's office and transport the samples back to the laboratory for analysis on their high end haematology systems, which are typically based on flow cytometer techniques. The results are then sent to the doctor. This process is very time-consuming, and more often than not the doctor will not have the results until the next day, at the least, or up to a week, typically.

Many haematology analyzers now incorporate flow cytometric techniques and other advances, which make the instrument relatively compact and more efficient through incorporation of semiconductor microelectronics where applicable; however, in the end these systems are functionally based on the Coulter instruments used by clinical laboratories in the late 1970's and early 1980's. While the low-end cytometer based haematology analyzers have reduced in price to $30,000 - $50,000, they are still beyond the budget of many small-medium sized hospital laboratories and physician offices, lack the flexibility and wide application support that the higher-end cytometers possess and still come with high maintenance and support costs.

Photomultiplier Tubes (PMT's) have been the incumbent photodetector of choice, within flow cytometers, for reasons of high dynamic range and sensitivity. However, a number of problems exist in that these PMT's are expensive (∼$1,000 per channel), require very high voltage operation (>1,000V), which leads to large and expensive power management electronics, and require high maintenance.

Recent advances in solid-state photodiode detectors have started to replace the forward scatter PMT. PCT patent publication number WO 01 94938, assigned to Idexx Lab Inc, describes a lensless cytometer whereby a photodiode is used to collect forward scatter. No optical filters are in the light path between the flow system and photodiode. Hence, light at all wavelengths is detected by the photodetector, even fluorescence. US2007097364 and US2007207536 describe a cytometer and fluorescent biosensor, respectively, using photodiode arrays.

In addition, recent advances in avalanche- and Geiger-mode photodiode detectors (referred to as Silicon Photomultipliers, or SiPMT detectors for short) are showing much promise in replacing the side scatter and fluorescence PMT's which require much more sensitivity and dynamic range, and therefore specificity, than the forward scatter PMT's. The main advantages are their much lower cost (<$50) and size, lower voltage operation (<50V) and higher photon detection efficiency. However, they still suffer from low dynamic range, leading to lower sensitivity and specificity compared with the PMT, and large dichroic filters and beam shaping optics are still needed. US 2006250604 (A1) describes one such cytometer based haematology analyzer, which uses avalanche photodiodes.

The use of dichroic filtering as a method to discriminate light across the UV, Visible and IR spectra is well known. JP 58044406 and US5341238 describe dichroic filtering techniques on glass and oxide semiconductor surfaces, respectively. SiPMT's, as with PMT's, cannot discriminate different wavelengths. So the large and costly dichroic filters ($300-500 each) remain.

In summary, an objective of the present invention is to provide a highly sensitive, low-cost optical sensor with integrated optical filtering and high dynamic range, to enable low-cost, portable and easily maintainable flow cytometer to overcome the above mentioned problems.

### Summary of the Invention

According to the invention there is provided, as set out in the appended claims, an integrated cytometric sensor, for use in a cytometric system, comprising:
a plurality of photodiode pixels;
a plurality of optical filters positioned on top of said photodiode pixels, wherein each optical filter comprises a set filter characteristic and co-operates with one or more of said plurality of photodiode pixels to define a filter cell; and
said filter cells are adapted to detect different wavelengths of light, when light is incident on said sensor, wherein different detected wavelengths are representative of specific biological targets.

The integrated cytometric sensor of the present invention provides integrated optical filtering and high dynamic range, to enable low-cost, miniaturised, portable and easily maintainable flow cytometer.

In one embodiment at least one or more of said photodiode pixels are voltage biased in one or more of the following modes: normal, avalanche or Geiger modes, for wide dynamic sensor range operation. By altering the reverse bias voltage, thus putting each photodiode into one of normal, avalanche or Geiger mode, the dynamic range of incident scattering and fluorescent power to which the filter cell array is sensitive to is greatly increased, thus significantly increasing the resultant instrument sensitivity and specificity.

The invention significantly advances the art to develop such a highly integrated cytometric sensor, by using arrays of SiPMT's, with each SiPMT element having monolithically integrated optical filters that are separately configured in normal, avalanche and Geiger modes to overcome issues of low dynamic range, sensitivity and specificity.

In one embodiment at least one filter cell comprises a metal-dielectric based arrangement. The metal-dielectric filter comprises integrated metal wires, separated by insulating dielectric layers, arranged in metal grids to form Fabry- Perot cavities.

In one embodiment at least one filter cell comprises a thin-film based arrangement. The thin film layer may comprise areas of different dielectric constants allowing filter cells with different defined filter characteristics across the sensor.

In one embodiment the defined filter characteristics are provided by an array of different dichroic filter materials, with a distribution of different dielectric constants.

The invention embeds a plurality of either patterned thin film filters, or metal-dielectric filters, or both, deposited on a photodiode pixel array, each pixel biased in either normal, linear avalanche or Geiger mode, in an embodiment that integrates multiple dichroic filters and photodetectors (photodiodes) into one monolithic solid state sensor with high photon sensitivity and dynamic range, thus advancing the miniaturisation, operation and cost reduction of analytical instruments.

In one embodiment the invention provides a transparent window cap comprising additional thin film filters to compliment the filter characteristics monolithically deposited on the sensor.

In one embodiment the filter cells are adapted to detect different wavelengths of light when light is incident on said sensor, said different wavelengths are dependent on the scattering and fluorescent signal components representative of specific biological targets.

In one embodiment the set filter characteristics comprises one or more of the following filters: band-pass, high-pass (long-pass), low-pass (short-pass), out-of-band and/or band-stop filters.

In one embodiment a first sensor is positioned axially to an incident light source generated from either a laser beam or monochromatically filtered LED, to sense forward scattering components. A second sensor can be placed orthogonal to said first sensor to sense side scattering and fluorescent components to provide further information on the biological target.

In one embodiment a second sensor is placed at an angle to said first sensor to sense side scattering and fluorscent components to provide further information.

In one embodiment a beam stop is positioned between the forward scatter sensor and light source, to minimise the saturating effects within the sensor from the optically high-power laser incident directly on to the sensor.

This sensor of the present invention incorporates multiple optical filters, with different pass/stop-band characteristics across visible and near-infrared spectra, monolithically integrated on an array of photodiodes.

The invention relates to the integration of multiple optical filters and photodiodes (currently separate components in analytic instruments) into a highly integrated solid-state cytometric sensor; and embodiments into analytical instruments such as flow cytometers, scanning cytometers or fluorimeters which significantly simplifies, miniaturises and lowers their operation and cost.

The invention also provides for the use of these cytometric sensors in a typical cytometer instrument, and the data signal path from sensor output through to instrument display.

In one embodiment at least one filter cell output is post-processed with fluorescent biomarker compensation algorithms by conditioning the filter output by predetermined fractions to compensate for fluorescent interference from other biomarker profiles

In one embodiment, the filter cell outputs are amplified and over-sampled into the digital domain for post-processing and later interpretation for user-readable display.

Such post-processing algorithms may include calibration algorithms, gain optimising algorithms or signal conditioning algorithms. These post-processing algorithms may either be implemented in a digital signal processor, hardwired into an ASIC, or integrated into the filter cell ASIC, using CMOS integration techniques.

In a further embodiment there is provided an integrated sensor, comprising:
a plurality of photodiode pixels;
a plurality of optical filters positioned on top of said photodiode pixels, wherein each optical filter comprises a set filter characteristic and co-operates with one or more of said plurality of photodiode pixels to define a filter cell; and
said filter cells are adapted to detect different wavelengths of light, when light is incident on said sensor.

In another embodiment there is provided a method of detecting different wavelengths representative of specific biological targets in a flow cytometric system comprising the steps of:
providing a plurality of photodiode pixels;
arranging a plurality of optical filters positioned on top of said photodiode pixels, wherein each optical filter comprises a set filter characteristic and co-operates with one or more of said plurality of photodiode pixels to define a filter cell; and
detecting different wavelengths of light, when light is incident on said filter cells, wherein a detected wavelength is representative of a specific biological target.

There is also provided a computer program comprising program instructions for causing a computer program to carry out the above method and control the sensor according to the invention which may be embodied on a recording medium, carrier signal or read-only memory.

### Brief Description of the Drawings

The invention will be more clearly understood from the following description of an embodiment thereof, given by way of example only, with reference to the accompanying drawings, in which:-
Figure 1 illustrates a plan view of the cytometric sensor showing an array of filter cells with one of the filter cells exploded to show individual photodiode pixels and biasing arrangement, according to the invention;
Figure 2 illustrates a cross section of the sensor design from Figure 1 of a packaged sensor, according to the invention;
Figure 3 illustrates a detailed perspective view of a thin-film based filtering approach;
Figure 4 illustrates a detailed perspective view of a metal-dielectric based filtering approach;
Figure 5 shows the spectral characteristics of filter cells centred around fluorescent marker emission peaks;
Figure 6 shows the spectral characteristics of filter cells using an out-of-band blocking filter in a window cap;
Figure 7 describes the data signal path from the output for the cytometric sensor stage through to a digital signal processor;
Figure 8 illustrates typical biomarker fluorescent profiles and the need for fluorescent compensation; and
Figure 9 shows an embodiment of a miniaturised flow cytometer using the integrated cytometric sensors of the present invention.

### Detailed Description of the Drawings

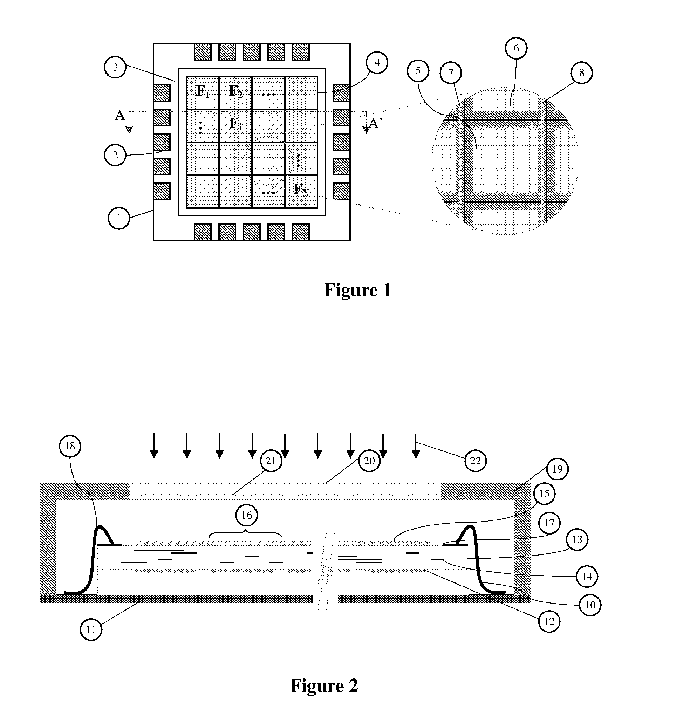

Figure 1 illustrates a sensor design of a semiconductor die 1 with IO pads 2 surrounding a core area 3. This core comprises an X*Y array 4 of N filter cells each denoted Fᵢ where i = 1..N ≤ X*Y. Each filter cell has a defined filter characteristic and a photodetector design comprising a plurality of photodiode pixels 5 and areas for other non photo-sensitive circuitry 6, necessary for inter-connection and sampling circuits. The photodiodes may be biased in the normal, avalanche or Geiger mode of operation. In this arrangement each filter cell column is biased into one of these three modes by connecting biasing voltage rails 7, 8 to each filter cell in the array column. For example, by connecting a voltage greater than the reverse breakdown of the photodiode e.g. -35V, assuming a -30V breakdown, to the biasing rail marked 8, the filter cell in the centre of the illustration, and those above and below it, is biased into Geiger mode. Similarly, connecting a bias voltage below the breakdown e.g. -10V, to the rail marked 7, will configure the filter cells in the left-most column into avalanche mode. Other embodiments may have separate biasing rails to enable greatest biasing flexibility. The photodiodes may be arranged in an array, as shown, or arranged in a different pattern, or even in a random arrangement. The filtering component of each filter cell comprises either a metal-dielectric based arrangement, or a thin-film based arrangement, or both, as described later in Figure 2

When a photodiode is reverse biased, a photon incident onto it's pn (or PiN) junction region creates an electron-hole pair upon impact ionisation. The reverse bias drives this electron to the anode and, as long as the bias voltage is relatively low, does not further amplify within the photodiode, thus creating a current collected at the anode that is proportional to the number of incident photons. This operation is termed normal reverse bias mode. Once the photodiode reverse bias is increased towards, but remains lower than, the reverse breakdown voltage, electron-hole pairs created by incident photons create a cascade of further electron-hole pairs, thus amplifying the effect of the first electron-hole pair generated by the incident photon. This describes the avalanche mode of operation. This cascade effect is not self sustaining but still results in moderate amplification with current gains typically in the 10¹-10³ range. This gain is higher the closer the reverse bias voltage approaches the reverse breakdown voltage. In Geiger mode, the photodiode is biased beyond its reverse breakdown voltage so that the incident photons create a rapid cascade of electron-hole pairs by impact ionisation. The high reverse-bias voltage sustains and amplifies the cascade. In this mode, the photodiode exhibits very high gain (typically >10⁵) and is highly sensitive to single photons but can only quantify low incident photon numbers since the high gain quickly saturates to the voltage rails.

Once the output current pulse is generated, quenching circuits may be used to quickly bring the photodiode out of these modes, especially avalanche and Geiger modes, and back to the reversed biased state prior to the onset of the cascading effects from incident photons. The quicker the cascade can be 'quenched' the more incident photon events can be sensed or counted. Passive quenching circuits typically use capacitors and resistors to limit the current flowing through the photodiode in avalanche and Geiger modes thus terminating the cascading effects. Active quenching circuits typically sense the increase in current and reduce the bias voltage across the photodiode bringing it out of the cascade.

By altering the reverse bias voltage, thus putting each filter cell into one of normal, avalanche or Geiger mode, the dynamic range of incident scattering and fluorescent power, to which the filter cell array is sensitive to, is greatly increased. For example, if two filter cells have the same filter characteristic, but one is in avalanche mode and the other is in Geiger mode, then the former can quantify high numbers of incident fluorescence/scattering photons without saturating, whereas the latter is sensitive to low numbers of incident fluorescence/scattering photons, even down to single photon detection.

It will be appreciated that the following sensor description shows the filter cells all integrated onto one semiconductor die. Equally, the cytometer apparatus later described may use a cytometric sensor with separate die, having one or more filter cells, mounted into one package.

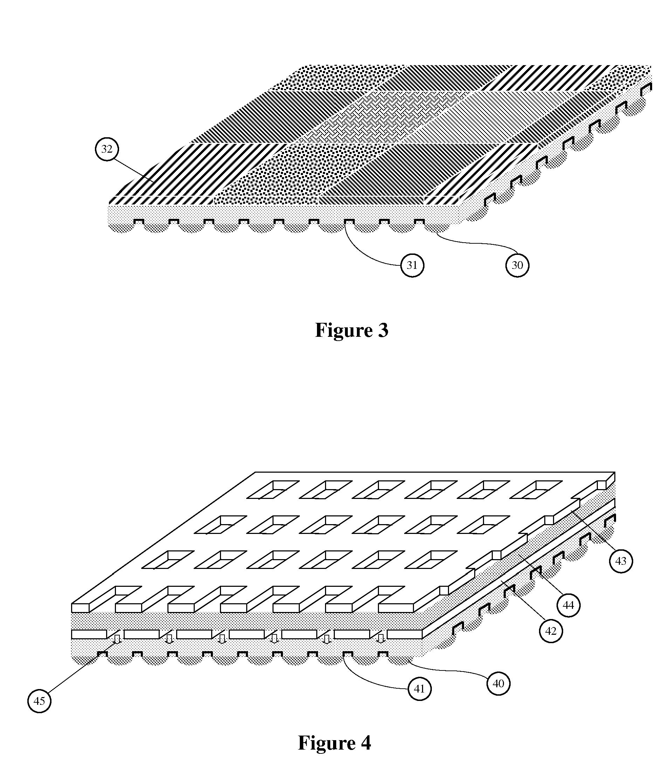

Figure 2 illustrates a cross-section elevation of the cytometric sensor, cut along AA' of Figure 1. Figure 2 shows a semiconductor die 10 mounted on a substrate carrier 11, comprising a plurality of photodiode pixels 12. The first of two independent filtering components is built using monolithic metal interconnection layers 13 typical of standard semiconductor processes, whereby metal wires 14 separated by insulating dielectric, typically used for interconnection of the integrated electronic circuits, are arranged in layers of metal grids to form Fabry-Perot cavities which filter the light incident upon them. This metal-dielectric filter component is described in greater detail below in Figure 4.

The second independent filtering component comprises a plurality of thin film layers 15 monolithically built atop the die and metal interconnect layers, with each thin film layer having different dielectric constants. Each single thin film layer may comprise areas of different dielectric constants 16, allowing filter cells with different filter characteristics across the sensor die. This thin-film based filter component is described in greater detail in Figure 3. The filter characteristic of each filter cell may be delivered using either the thin-film based approach, the metal-dielectric approach, or both.

The sensor design interfaces through IO pads 17 connected to the substrate carrier via wirebonds 18. Other methods of mounting the die that do not obscure the photodiodes may be used. The sensor die can be protected with a package 19 that has a transparent window cap 20. This window cap may either be transparent or may have deposited thin film filtering layers 21 to compliment the filter characteristics monolithically deposited on the sensor die. In this way the light 22 incident on the package can be filtered by a combination of the window cap and monolithic filters (thin films and/or metal-dielectric) before detection by the photodiode pixels.

Figure 3 describes the thin-film based filter component in more detail, where a section of a die on a semiconductor wafer is shown. A monolithic patterned dichroic filter array is built on the underlying semiconductor die, by combining microelectronic and microlithography techniques. Once the underlying photodiode 30 and metal interconnection wires 31 (in this case, these metal wires are used for normal electronic circuit interconnection, as opposed to forming part of a Fabry-Perot cavity) are built, the semiconductor wafer is coated with a photoresist. The assembly is masked, and the unmasked photoresist, after exposure to ultraviolet light, is developed to expose a predetermined section 32. That section of wafer is then over developed to expose the underlying wafer. Dichroic filter material is then deposited onto the wafer, and the photoresist layer is then removed, leaving only the dichroic filter material on the wafer, with well-defined edges, to cleanly separate it from other sections that are subsequently developed. Separate filter sections can be produced in a pattern to simultaneously measure scattering and fluorescent wavelengths. These filter sections are cast in patterns that overlay the photodiodes, thus defining the filter cell. The process is repeated to create an array of different dichroic filter materials, with a distribution of dielectric constants. The different shading patterns of these sections in Figure 3 depict filter cells with different dichroic filter material, each with different dielectric constants, and thus different filter characteristics.

Figure 4 describes the metal-dielectric filter component. As in Figure 3 the filter component is built on the underlying photodiode array 40 and the low-level metal interconnection wires 41. In modern semiconductor processes, the metal interconnection lines are comparable or smaller than the wavelength of visible light (400-700nm). At these scales, the metal interconnection layers 42 43 are not as opaque to visible light as bulk metal, and variations in the pattern and inter-layer dielectric 44 thickness, control the probability that incident light at a particular wavelength will filter through 45 to the underlying photodiode, leading to the design of integrated metal-dielectric filters. The likelihood of the incident light filtering through to the photodiode is governed by the optical properties of the metal wires and dielectric layers, respective layer thickness and the geometry of the patterns implemented. This so-called surface-plasmon induced resonance phenomenon yields a peak transmittance, which occurs for a given wavelength depending on the type of metal, the dielectric surrounding and pattern geometry. Exemplary teachings on this surface-plasmon phenomenon can be found in "Extraordinary optical transmission through sub-wavelength hole arrays", Ebbesen et al., Nature (London), Feb. 1998, vol. 391, pp667-669 and on metal-dielectric filters can be found in US2003103150 (A1). The use of such monolithically integrated metal-dielectric filters with photodiodes, to produce a colour sensitive photodetector, or so-called Integrated Color Pixel is known in the art.

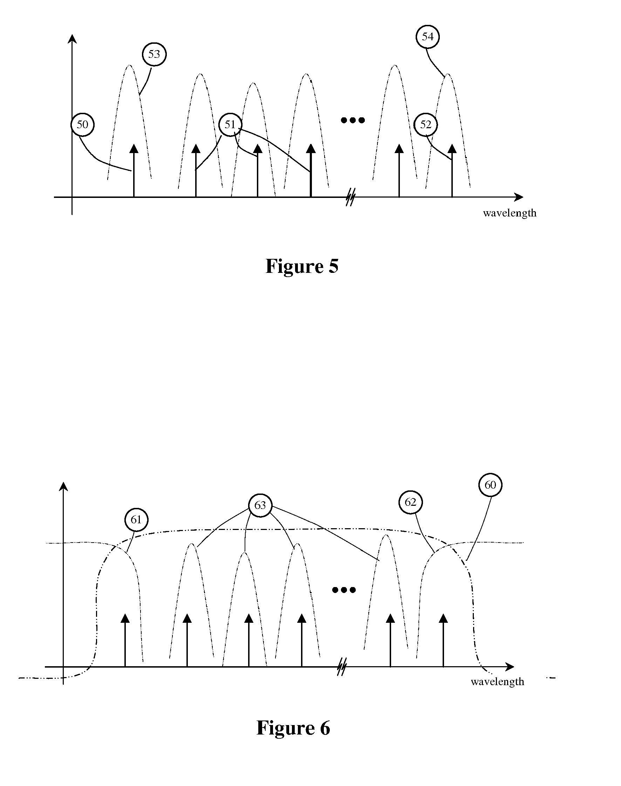

Figure 5 shows a typical spectral characteristic of the filter cells required for cytometry applications. In this illustration, the light incident on the sensor of Figure 2 comprises light scattering at the lowest wavelength 50, from forward or side scattering generated from the laser beam interrogation of the cells, and a plurality of fluorescent light signals each with emission peaks at longer wavelengths 51 up to wavelength maxima 52. The filter characteristics of the filter cells discriminate incident light scattering components 53 and the plurality of fluorescence components 54 allowing the photodiode pixels to detect these wavelength discriminated signals incident upon them. This embodiment of the sensor uses filter cells with band-pass characteristics centred at differing wavelengths, normally coincident with the peak fluorescent emission of respective biomarkers. Other embodiments may use filter cells with different filter characteristics such as, but not limited to, high-pass, low-pass, and band-stop, depending on the biological target being diagnosed.

Figure 6 shows the spectral characteristics whereby the filter characteristics are defined by the combination of out-of-band blocking filter characteristics 60 and a plurality of in-band filter characteristics 61, 62, 63. The out-of-band blocking filter may be realised by deposited dielectric thin films on the window cap, as previously described in Figure 2 whereas the in-band filter characteristics are as a result of the monolithic filters integrated in the filter cells. In this embodiment, the light scattering component of the incident light is filtered by a short-pass filter cell 61. The fluorescent component with the longest wavelength is filtered by a long-pass filter cell 62. The intermediate wavelength fluorescent components are filtered using a plurality of band-pass filter cells 63. Another embodiment of the out-of-band blocking filter, is the deposition of metal-dielectric filters, as already described, onto the window cap.

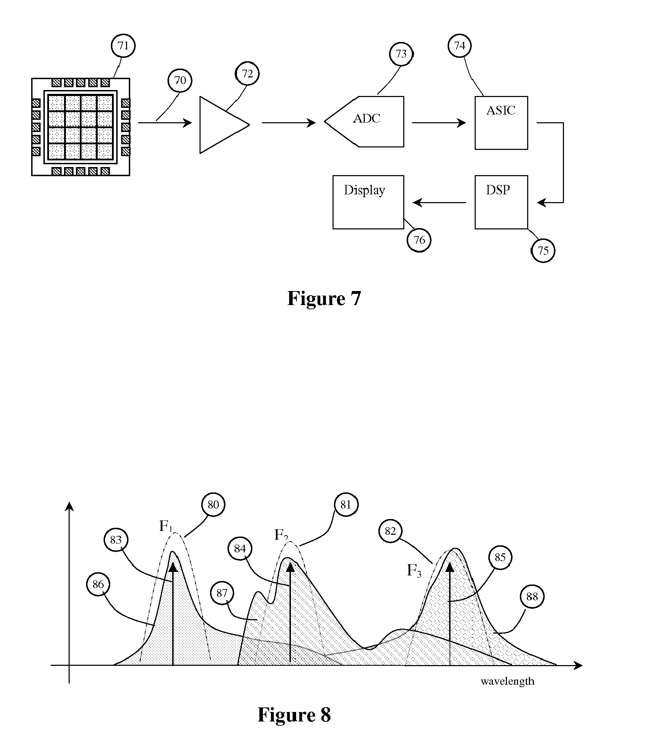

Figure 7 describes the electronic data signal path whereby the multiple filter cell outputs 70 from the Integrated Cytometric Sensor 71 are amplified 72 and digitized by an analog-to-digital converter 73. A custom ASIC 74 and digital signal processor 75 (DSP) configures and controls the integrated cytometric sensor, and implement signal conditioning and other post-processing algorithms, with the latter sending data output to the instrument display 76. These algorithms include, but are not limited to, glitch and dark count filtering, fluorescent biomarker compensation (described in Figure 8 described below) and control/configure algorithms for the photodiode bias voltage for optimum performance. These algorithms are typically partitioned across an ASIC and/or DSP. It will be appreciated that the sensor 71 can be combined with the electronic circuitry on a single integrated chip to improve the efficiency by providing finer feedback loops, thus improving overall performance.

When the photodiode detectors of the filter cells are biased in high-gain avalanche and Geiger modes, thermal or shot noise create false output pulses known as dark current pulses. These dark current interferer pulses may be filtered using decision-driven gating methods. For example, no filter cell outputs due to scattering or fluorescent light are generated unless the biological targets intersect the laser beam. Typically, no fluorescence signals are produced unless light scattering is produced. Therefore, any dark current pulses may be filtered out when no light scattering is detected.

The need for fluorescent biomarker compensation is illustrated in Figure 8. In this figure, the characteristics for three filter cells are denoted F₁ 80, F₂ 81 and F₃ 82. These filter characteristics discriminate the incident scattering and fluorescence on to the photodiodes, as already described. These are typically centred on the wavelengths of peak fluorescence of the fluorescently tagged biomarkers, at 83, 84, 85, with profiles denoted as 86, 87, 88, respectively. Here, the fluorescent profile 86 with peak fluorescence 83 interferes upon filter characteristic F₂. Similarly, the fluorescent profile 88 with peak fluorescence 85 interferes upon filter characteristic F₂. Since the emission profiles of these biomarkers are predefined, this interference may be minimised by reducing the F₂ filter cell output by predetermined fractions of the fluorescent interferers. Similarly, well defined fluorescent profiles of biomarkers may be used to implement calibration algorithms.

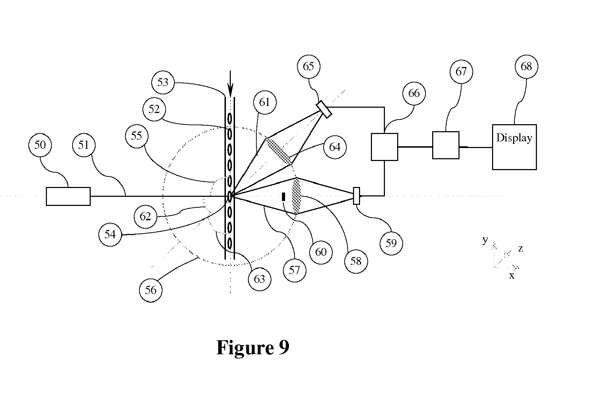

Figure 9 shows an embodiment of a miniaturised flow cytometer using two integrated cytometric sensors 59 and 65, illustrating operation of the invention. Here a laser source 50 generates a light beam 51 incident upon biological targets (e.g. cells, molecules, proteins) 52 flowing in a fluidic channel 53 in the direction as shown by the arrow. Equally, a monochromatically filtered LED source may be used in lieu of a laser source. The region where the laser beam is incident on the biological targets shall be defined as the detection zone 54 with the angle of incidence, ϕ, 55 normally 90°. As the biological targets flow across the laser beam, light scattering and fluorescent components are emitted in all directions 56 (basically full 360 Degrees). The light scattering component is emitted at a wavelength equivalent to the incident laser beam.

The fluorescent light components are emitted at a plurality of wavelengths defined by the properties of the fluorescent markers which may have been mixed with the biological targets. The emitted light component axial to the incident laser beam 57, denoted as the forward scattering component, is focused by the forward lens 58 on to the forward cytometric sensor 59. Other embodiments may not use this forward lens. A beam stop 60 may be placed axially between the detection zone and the cytometric sensor, in front of the forward lens, if used, to avoid the laser beam damaging the forward scatter sensor when the biological targets are not in between. Extra diagnostic information is collected by interrogating side scattering and fluorescent components 61 at an angle, Φ, 62 to the axial and an angle, Ψ, 63 to the fluidic channel. Φ and Ψ are normally 90° each.

This emission component is focused by the side lens 64 on to the side cytometric sensor 65. Other embodiments may not use this side lens. Both forward and side cytometric sensors interface to an ASIC 66 and DSP 67, whose operation is previously described with respect to Figure 7. The output information can be displayed on to a display unit 68 in user-readable format, e.g. a Graphic User Interface. Further cytometric sensors may be placed at varying angles {ϕ, Φ, Ψ} to, and distances from, the detection zone.

It is envisaged that the embodiment described with respect to Figure 9 can be incorporated in a hand held device, for example the size of a typical personal digital assistant. The use of the integrated sensor hereinbefore described allows for fast detection (in real time) of a biological target in a sample.

It will be appreciated that the invention can be incorporated in other similar analytical instruments. This invention enables the various embodiments of such instruments presented herein. Such instruments include, for example, and without limitation, immunoassay analyzers, clinical haematology analyzers, flow and scanning cytometers, fluorimeters, and chemistry analyzers. The specific biological targets can be in a fluid sample or a non-fluidic sample, so long as the sample can be subjected to a light source and detection of different wavelengths can be achieved.

It will be appreciated that the invention illustrates a single laser source in Figure 9, use of second laser (or more) can be provided to provide a wider range of bio-compatibility and also to provide additional improved compensation methods.

The embodiments in the invention described with reference to the drawings comprise a computer apparatus and/or processes performed in a computer apparatus. However, the invention also extends to computer programs, particularly computer programs stored on or in a carrier adapted to bring the invention into practice and control operation of the cytometric sensor. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

The invention is not limited to the embodiments hereinbefore described but may be varied in both construction and detail.

## Claims

1. An integrated cytometric sensor, for use in a cytometric system, comprising:
a plurality of photodiode pixels;
a plurality of optical filters positioned on top of said photodiode pixels, wherein each optical filter comprises a set filter characteristic and co-operates with one or more of said plurality of photodiode pixels to define a filter cell; and
said filter cells are adapted to detect different wavelengths of light, when light is incident on said sensor, wherein different detected wavelengths are representative of specific biological targets.

2. The integrated cytometric sensor of claim 1 wherein at least one or more of said photodiode pixels are voltage biased in one or more of the following modes: normal, avalanche or Geiger modes, for wide dynamic sensor range operation.

3. The integrated cytometric sensor of claim 1 or 2 wherein at least one filter cell comprises a metal-dielectric based arrangement.

4. The integrated cytometric sensor of claim 3 wherein said metal-dielectric filter comprises integrated metal wires separated by insulating dielectric, are arranged in metal grids separated by insulating dielectric layers, to form Fabry- Perot cavities.

5. The integrated cytometric sensor of any preceding claim wherein at least one filter cell comprises a thin-film based arrangement.

6. The integrated cytometric sensor of claim 5 wherein said thin film layer comprises areas of different dielectric constants allowing filter cells with different defined filter characteristics across the sensor.

7. The integrated cytometric sensor of claim 6 wherein said defined filter characteristics are provided by an array of different dichroic filter materials, with a distribution of different dielectric constants.

8. The integrated cytometric sensor of any preceding comprising a transparent window cap comprising additional thin film filters to compliment the filter characteristics of said optical sensors.

9. The integrated cytometric sensor of any preceding claim wherein said filter cells are adapted to detect different wavelengths of light when light is incident on said sensor, said different wavelengths are dependent on scattering and fluorescent signal components representative of specific biological targets.

10. The integrated cytometric sensor of any preceding claim wherein the set filter characteristics comprises, one or more of the following filters: band-pass, high-pass, low-pass, long-pass, short-pass, out-of-band and/or band-stop filters.

11. The integrated cytometric sensor of any preceding claim wherein at least one filter cell output is post-processed for fluorescent biomarker compensation by conditioning the filter output by predetermined fractions to compensate for fluorescent interference.

12. The integrated cytometric sensor of any preceding claim wherein a first sensor is positioned axially to an incident light source generated from a laser beam or monochromatically filtered LED.

13. The integrated cytometric sensor of the apparatus of claim 12, wherein a second integrated cytometric sensor is placed orthogonal to said first sensor to sense side scattering and fluorescent components to provide further information.

14. The integrated cytometric sensor of the apparatus of claim 12, wherein a second sensor is placed at an angle to said first sensor to sense side scattering and fluorescent components to provide further information.

15. The integrated cytometric sensor as claimed in claims 12 to 14 further comprising a beam stop positioned between the sensor and light source.
